# EUROPEAN PATENT SPECIFICATION

(11) **EP 4 383 442 B1**
(45) Date of publication and mention of the grant of the patent: **04.02.2026**
(21) Application number: 22911937.5
(22) Date of filing: 21.12.2022
(51) Int. Cl.: H01M 50/536, B23K 37/04, B23K 26/21, B23K 26/14, H01M 50/107

(54) **WELDING JIG**
SCHWEISSVORRICHTUNG
GABARIT DE SOUDAGE

(30) Priority: 23.12.2021 KR 20210186536; 19.12.2022 KR 20220178491
(43) Date of publication of application: 12.06.2024
(73) Proprietor: LG Energy Solution, Ltd., Seoul 07335 (KR)
(72) Inventor: LEE, Jun Ho, Daejeon 34122 (KR)
(74) Representative: Hoffmann Eitle
(86) International application number: PCT/KR2022/020980
(87) International publication number: WO 2023/121304

(56) References cited:
- JP-A- 2003 086 472
- JP-A- 2003 088 988
- JP-A- 2020 524 380
- JP-A- H05 242 907
- KR-A- 20150 130 047
- KR-A- 20160 107 704
- KR-A- 20200 033 251

## Description

### TECHNICAL FIELD

### CROSS-REFERENCE TO RELATED APPLICATION

The present application claims the benefit of the priority of Korean Patent Application Nos. 10-2021-0186536, filed on December 23, 2021, and 10-2022-0178491, filed on December 19, 2022.

### TECHNICAL FIELD

The present invention relates to a jig for welding, and more particularly, to a jig for welding that is capable of preventing spatter, which is foreign matter caused by welding, from being introduced into a secondary battery during welding between a collector plate connected to an electrode assembly in a secondary battery can body and a beading part that is a portion recessed inward from the can body, and is capable of improving quality of the welding by increasing a welding force between the collector plate and the beading part, which are objects to be welded, to increase a degree of completion of the welding.

### BACKGROUND ART

According to the shape of a battery case, secondary batteries may be classified into a cylindrical type battery and a prismatic type battery, each of which has an electrode assembly embedded in a cylindrical or prismatic metal can, a pouch type battery having an electrode assembly embedded in a pouch type case made of an aluminum laminate sheet, and so on.

In addition, the electrode assembly embedded in a battery case is a chargeable and dischargeable power generation element having a structure in which a positive electrode/a separator/a negative electrode are stacked. The electrode assembly may be classified into an electrode assembly having a jelly-roll-type structure in which long sheet-shaped positive and negative electrodes, each of which is coated with an active material, are wound by interposing a separator therebetween, an electrode assembly having a stacked type structure in which multiple positive and negative electrodes, each of which has a predetermined size, are stacked in sequence with a separator interposed therebetween, and a stack and folding type electrode assembly in a structure in which bi-cells or full-cells are wound which have positive and negative electrodes in a predetermined unit stacked with a separator interposed therebetween.

Among these electrode assemblies, the jelly-roll-type electrode assembly has advantages such as easiness in manufacture and a high energy density per weight, and thus, are widely manufactured. The jelly-roll-type electrode assembly may be manufactured by assembling a stack of the long sheet-shaped positive and negative electrodes and the separator interposed therebetween, and winding the electrode stack in a longitudinal direction of the sheet in a state in which a core is in contact with an end at one side of the electrode stack. Then, this jelly-roll-type electrode assembly may be inserted into a battery case provided in a cylindrical metal can to form a cylindrical type secondary battery.

Such a cylindrical type secondary battery is designed to have a high energy density and thus, a demand for the cylindrical type secondary battery is also on an increasing trend.

In such a cylindrical type secondary battery, a new sized cell (a tabless cell) manufactured to be in a tabless state is a secondary battery that has an energy density 5 times higher than that of the existing one and thus, has high investment cost efficiency.

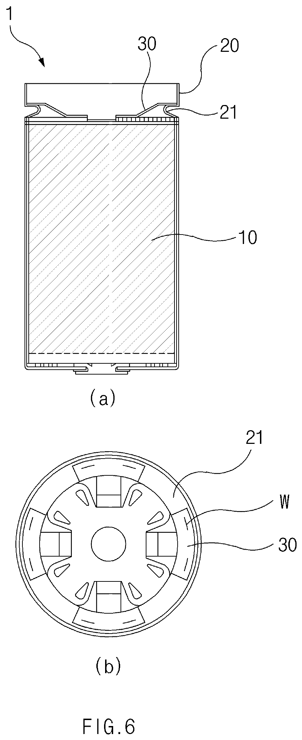

In the case of the new sized cell (tabless cell) thus manufactured, welding between the beading part, which is formed to be recessed from an upper portion of the can, and the collector plate is performed in a state in which the jelly-roll-type electrode assembly welded to the collector plate is inserted into the can (see FIG. 6). However, as this welding work is performed in the can, there is a problem that spatter, which is foreign matter caused by the welding, is introduced into the can and quality is deteriorated.

In addition, when welding the collector plate and the beading part to each other, the welding is not properly carried out when the beading part is not flat or the collector plate is in poor contact with the beading part. Accordingly, a problem in weld quality and a problem in quality of the secondary battery as a whole occur.
JP 2003-88988 A relates to a jig for positioning a cylindrical body for laser welding, and more particularly, to a mounting shaft part of a member fixed in the cylindrical body in a mounting hole located in a central region of an end wall of the cylindrical body. JP 2003 086472 A discloses another known jig for laser welding, having a hole in the central portion of a protrusion to enable the laser to pass through.

### DISCLOSURE OF THE INVENTION

### TECHNICAL PROBLEM

The present invention has been devised to solve the problems as above and an object of the present invention is to provide to a jig for welding that is capable of preventing spatter, which is foreign matter caused by welding, from being introduced into a secondary battery during welding between a collector plate connected to an electrode assembly in a secondary battery can body and a beading part that is a portion recessed inward from the can body, and is capable of improving quality of the welding by increasing a welding force between the collector plate and the beading part, which are objects to be welded, to increase a degree of completion of the welding.

### TECHNICAL SOLUTION

A jig for welding according to the present invention relates to a jig for welding that is used in a welding process during manufacturing of a secondary battery, and includes a body part, and a protrusion that extends downward from a bottom surface of the body part, has a size corresponding to a top opening of the secondary battery, and is inserted into the top opening of the secondary battery in the welding process, wherein a welding hole through which laser that performs the welding passes is defined in each of a perimetric portion of the protrusion and a region of the body part, which corresponds to a perimetric portion of the protrusion, wherein the protrusion includes a pressing portion that is provided in a peripheral part of the welding hole and presses an object to be welded in the secondary battery.

In the welding hole, a size of an outlet through which the laser is discharged may be smaller than a size of an inlet through which the laser enters.

The welding hole may have a shape in which a width gradually decreases in a downward direction.

A pair of welding holes may be provided in each of positions at which a perimetric portion of the protrusion is quartered at an angle of 90 degree to form a total of eight through-holes.

The welding hole may be provided in each of positions at which a perimetric portion of the protrusion is quartered at an angle of 90 degree to form a total of four through-holes.

The pressing portion may be a portion of a bottom surface of the protrusion, which presses the object to be welded.

The protrusion may include a shielding gas inlet nozzle that is provided in an inner side of the perimetric portion and to allow shielding gas to flow into the secondary battery.

A shielding gas flow hole for supplying, to the welding hole, the shielding gas flowing into the secondary battery may be defined in a lower portion of the protrusion.

The shielding gas flow hole may be defined to be communicated with a lower end of the welding hole.

The shielding gas inlet nozzle may have a lower end that is disposed downward from the lower end of the welding hole by a predetermined distance.

A shielding gas supply pipe for supplying the shielding gas to the shielding gas inlet nozzle may be connected to a side surface of the body part.

The body part may include an edge part that is a region other than a region in which the protrusion is defined, and a coupling hole for fixing may be defined in the edge part.

The pressing portion may be a pressing protrusion that is provided on a bottom surface of the protrusion and presses the object to be welded.

The pressing protrusion may be provided to be adjacent to one side or the other side of the welding hole in a perimetric direction of the protrusion.

The secondary battery may be a cylindrical type secondary battery, and the protrusion may be provided in a cylindrical shape and extend downward from the bottom surface of the body part.

The pressing portion may press a top surface of a collector plate connected to an electrode assembly in the cylindrical type secondary battery in order to perform welding between the collector plate and a beading part that is provided in a cylindrical type secondary battery can body.

### ADVANTAGEOUS EFFECTS

The present invention relates to the jig for welding that is capable of preventing spatter, which is the foreign matter caused by the welding, from being introduced into the secondary battery during the welding between the collector plate connected to the electrode assembly in the secondary battery can body and the beading part that is the portion recessed inward from the can body, and is capable of improving the quality of the welding by increasing the welding force between the collector plate and the beading part, which are the objects to be welded, to increase the degree of completion of the welding.

### BRIEF DESCRIPTION OF THE DRAWINGS

FIG. 1 is a perspective view illustrating a jig for welding according to Embodiment 1 of the present invention.
FIG. 2 is a front view illustrating a jig for welding according to Embodiment 1 of the present invention.
FIG. 3 is a plan view illustrating a jig for welding according to Embodiment 1 of the present invention.
FIG. 4 is a bottom view illustrating a jig for welding according to Embodiment 1 of the present invention.
FIG. 5(a) is a cross-sectional view illustrating an electrode assembly and a collector plate connected to the electrode assembly. FIG. 5(b) is a plan view illustrating an object in FIG. 5(a) when viewed from an upper side.
FIG. 6(a) is a cross-sectional view illustrating a state in which an electrode assembly to which a collector plate is connected is inserted into a secondary battery can body. FIG. 6(b) is a plan view illustrating an object in FIG. 5(a) when viewed from an upper side.
FIG. 7 is a cross-sectional view illustrating a state in which a jig for welding according to Embodiment 1 of the present invention is used during manufacturing (welding) of a secondary battery.
FIG. 8 is a perspective view illustrating only a jig for welding and a collector plate according to Embodiment 1 of the present invention.
FIG. 9 is a front view illustrating a jig for welding according to Embodiment 2 of the present invention.
FIG. 10 is a bottom view illustrating a jig for welding according to Embodiment 2 of the present invention.
FIG. 11 is a plan view illustrating a portion of a collector plate, which is pressed by a jig for welding according to Embodiment 2 of the present invention.
FIG. 12 is a plan view illustrating a jig for welding according to Embodiment 3 of the present invention.
FIG. 13 is a bottom view illustrating a jig for welding according to Embodiment 3 of the present invention.

### MODE FOR CARRYING OUT THE INVENTION

Hereinafter, preferred embodiments of the present invention will be described in detail with reference to the accompanying drawings to enable those skilled in the art to which the present invention pertains to easily carry out the present invention. The present invention may, however, be embodied in different forms and should not be construed as limited by the embodiments set forth herein.

The parts unrelated to the description, or the detailed descriptions of related well-known art that may unnecessarily obscure subject matters of the present invention, will be ruled out in order to clearly describe the present invention. Like reference numerals refer to like elements throughout the whole specification.

Moreover, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

### Embodiment 1

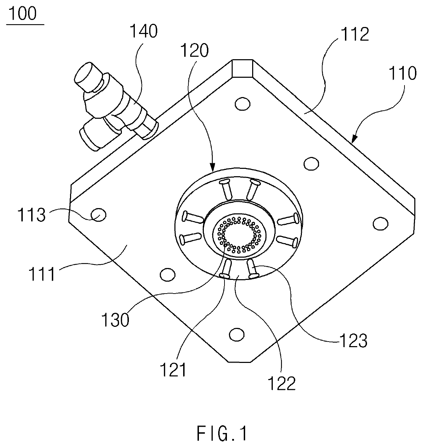

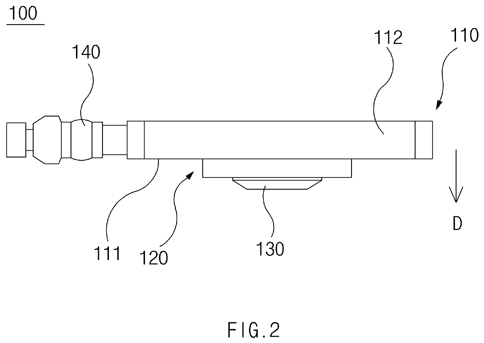

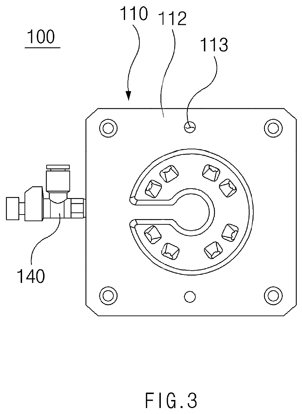

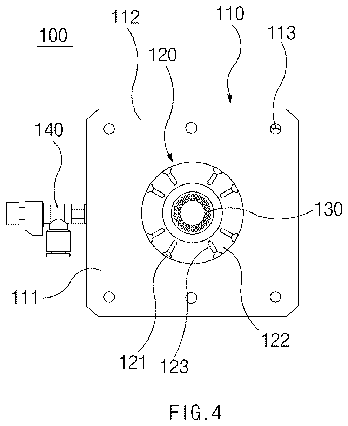

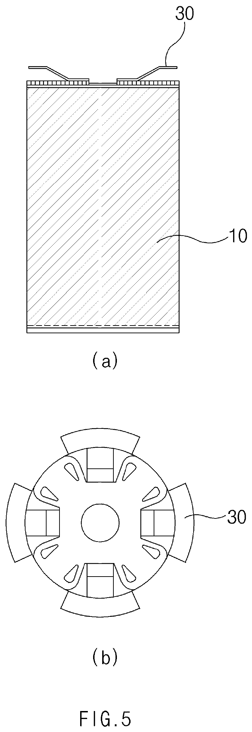

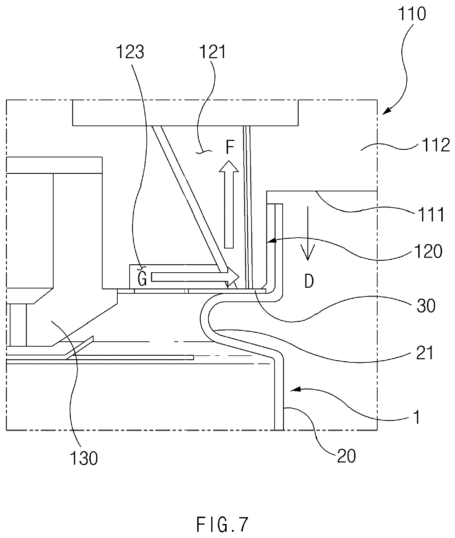

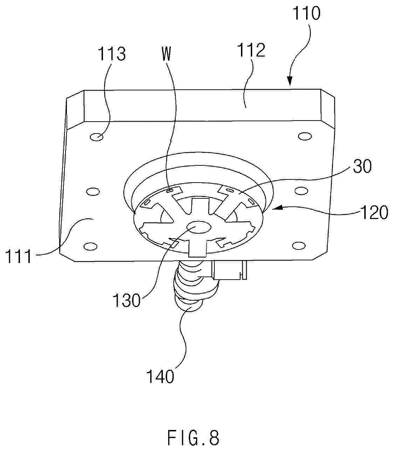

FIG. 1 is a perspective view illustrating a jig for welding according to Embodiment 1 of the present invention. FIG. 2 is a front view illustrating a jig for welding according to Embodiment 1 of the present invention. FIG. 3 is a plan view illustrating a jig for welding according to Embodiment 1 of the present invention. FIG. 4 is a bottom view illustrating a jig for welding according to Embodiment 1 of the present invention. FIG. 5(a) is a cross-sectional view illustrating an electrode assembly and a collector plate connected to the electrode assembly. FIG. 5(b) is a plan view illustrating an object in FIG. 5(a) when viewed from an upper side. FIG. 6(a) is a cross-sectional view illustrating a state in which an electrode assembly to which a collector plate is connected is inserted into a secondary battery can body. FIG. 6(b) is a plan view illustrating an object in FIG. 5(a) when viewed from an upper side. FIG. 7 is a cross-sectional view illustrating a state in which a jig for welding according to Embodiment 1 of the present invention is used during manufacturing of a secondary battery. FIG. 8 is a perspective view illustrating only a jig for welding and a collector plate according to Embodiment 1 of the present invention.

Hereinafter, when describing a jig for welding according to Embodiment 1 of the present invention, the jig for welding according to Embodiment 1 of the present invention will be described with reference to FIGS. 1 to 8.

A jig 100 for welding according to Embodiment 1 of the present invention may be the jig 100 for welding that is used in a welding process during manufacturing of a secondary battery. The jig 100 for welding according to Embodiment 1 of the present invention may include a body part 110 and a protrusion 120.

Referring to FIGS. 1 to 4, the body part 110 may be a portion that constitutes a body of the jig 100 for welding. The protrusion 120 may be a portion that extends from a bottom surface 111 of the body part in a downward direction D. The protrusion 120 may be a portion that is inserted into an opening of the secondary battery in the welding process, and accordingly, the protrusion 120 may have a size corresponding to a top opening of the secondary battery. Here, having a corresponding size may mean that, when the secondary battery is a cylindrical type, an opening diameter of the secondary battery and a diameter of the protrusion 120 correspond to each other.

In one example, when the secondary battery is a cylindrical type secondary battery, the protrusion 120 may be provided in a cylindrical shape and extend from the bottom surface 111 of the body part in the downward direction. In the case of shapes other than a circular shape, it may mean that the shapes, widths, or the like, are provided to correspond to each other so as to be insertable.

In the jig 100 for welding according to Embodiment 1 of the present invention, a welding hole 121 through which laser that performs the welding passes may be defined in each of a perimetric portion of the protrusion 120 and a region of the body part 110, which corresponds to the perimetric portion of the protrusion 120. That is, the welding hole 121 may be defined in the perimetric portion of the protrusion 120, and the welding hole 121 may be defined also in the body part 110 so as to communicated with the welding hole 121 defined in the perimetric portion of the protrusion 120. Specifically, the laser that performs the welding needs to pass through the body part 110 and the protrusion 120, and a path through which this laser passes may be the welding hole 121. A pair welding holes 121 may be provided in each of positions at which a perimetric portion of the protrusion 120 is quartered at an angle of 90 degree to form a total of eight through-holes.

The protrusion 120 may include a pressing portion 122 that is provided in a peripheral part of the welding hole 121 and presses an object to be welded in the secondary battery. The pressing portion 122 may be a portion of a bottom surface of the protrusion 120, which presses the object to be welded. That is, two objects to be welded to each other need to be pressed so as to be in close contact with each other during performing laser welding while the laser passes through the welding hole 121 and is emitted onto the objects to be welded. To this end, a component that presses the objects to be welded may be necessary. As a result, as necessary, the pressing portion 122 may be a portion that presses the objects to be welded. Thus, the pressing portion 122 may be a portion that is disposed around the welding hole 121 on the bottom surface of the protrusion 120.

The pressing portion 122 may be a pressing surface that is provided in a planar shape, but is not necessarily limited to the planar shape. As reviewed in Embodiment 2 below, the pressing portion 122 may be provided in a shape of a protrusion. In addition, the pressing portion 122 may have any shape as long as the pressing is carried out effectively and efficiently through the shape.

FIGS. 5 and 6 illustrate views of a cylindrical type secondary battery 1 to which the jig 100 for welding according to Embodiment 1 of the present invention is applicable. In particular, FIGS. 5 and 6 illustrate a portion of a welding process in manufacturing of a new sized cell (tabless cell) manufactured to be in a tabless state. FIG. 5 illustrates a state in which a collector plate 30 is connected to a jelly-roll-type electrode assembly 10 inserted into the new sized cell (tabless cell) by welding. The collector plate 30 may be a component that is a raw material welded to the jelly-roll-type electrode assembly 10 and serves to collect electrons.

A combination of the electrode assembly 10 and the collector plate 30, which is illustrated in FIG. 5, may be inserted into a can body 20 illustrated in FIG. 6. A beading part 21, which is provided to be recessed inwardly, may be provided in an upper portion of the can body 20 after the combination of the electrode assembly 10 and the collector plate 30 is inserted into the can body 20. Accordingly, an edge part of the collector plate 30 may be disposed on a top surface of the beading part 21. The welding between the beading part 21, which is provided to be recessed from an upper portion of the can, and the collector plate 30 may be performed. The jig 100 for welding according to Embodiment 1 of the present invention may be, as an example, a jig used in the welding between the beading part 21 and the collector plate 30.

FIG. 7 illustrates a state, in which the protrusion 120 extending from a bottom surface 111 of the body part 110 in the downward direction D is inserted into a top opening of the secondary battery 1, and illustrates a state in which the jig 100 for welding according to Embodiment 1 of the present invention performs the welding while pressing a top surface of the collector plate 30, which is disposed on the top surface of the beading part 21.

Referring to FIGS. 1 to 4 and 7, the pressing portion 122 may press the top surface of the collector plate 30 in order to perform the welding between the collector plate 30, which is connected to the electrode assembly 10 in the cylindrical type secondary battery 1, and the beading part 21 which is provided in the can body 20 of the cylindrical type secondary battery 1. The pressing portion 122 may increase a degree of completion of the welding by increasing a welding force between the collector plate 30 and the beading part 21, which are the objects to be welded.

FIG. 8 is a view illustrating the jig 100 for welding and the collector plate 30 in order to clearly illustrate the state in which the jig 100 for welding according to Embodiment 1 of the present invention presses the collector plate 30. FIGS. 6 and 8 illustrate a welding position W, and this welding position W may be a position at which the laser passing through the welding hole 121 performs the welding. A pair of welding positions W may be provided in each of positions at which a perimetric portion of the collector plate 30 is quartered at an angle of 90 degree to form a total of eight welding positions. This may have a shape corresponding to the position of the welding hole 121.

Referring to FIG. 7, the welding hole 121 provided to pass through the protrusion 120 and the body part 110 may have a shape in which a size of an outlet through which the laser is discharged is smaller than a size of an inlet through which the laser enters.

In addition, the welding hole 121 may have a shape in which a width gradually decreases in the downward direction. As a lower end of the welding hole 121 needs to be accurately pointed at a point at which the welding is carried out, the welding hole 121 may have a small width in order not to allow the laser to be in contact with another point. An upper end of the welding hole 121 may has a great width in order to receive the laser having a greater width. Accordingly, the welding hole 121 may have a shape of which a width is great at an upper side and gradually decreases in the downward direction. As an example, the welding hole 121 may be provided in a shape in which a truncated cone is upside down. In addition, as illustrated in FIG. 7, the welding hole 121 may be provided so that in the welding hole 121, an outer side surface is vertically inclined, and an inner side surface is gently inclined. Alternatively, the welding hole is not necessarily to have a shape of which the width gradually decreases, and there may be various possible embodiments in a shape in which the outlet is smaller than the inlet.

Referring to FIGS. 1 to 4 and 7, in the jig 100 for welding according to Embodiment 1 of the present invention, the protrusion 120 may include a shielding gas inlet nozzle 130 that is provided in an inner side of the perimetric portion and to allow shielding gas to flow into the secondary battery 1. Here, the shielding gas may mean inert or semi-inert gas that is commonly used in the welding process. The shielding gas may serve to block introduction of oxygen in the atmosphere during high temperature reaction of the objects to be welded. In Embodiment 1 of the present invention, the shielding gas may be nitrogen gas.

The shielding gas may be supplied from the outside of the body part 110, and a shielding gas supply pipe 140 for supplying the shielding gas to the shielding gas inlet nozzle 130 may be connected to a side surface of the body part 110. That is, the shielding gas may flow from the outside of the body part 110 through the shielding gas supply pipe 140 into the body part 110 and then, flow into the secondary battery 1 through the shielding gas inlet nozzle 130.

Specifically, referring to FIG. 7, the shielding gas may flow into the can body 20 through the shielding gas inlet nozzle 130. The shielding gas has to form the atmosphere at a portion W at which the welding is performed, and thus, needs to flow to the portion at which the welding is performed. To this end, a shielding gas flow hole 123 may be defined in a lower portion of the protrusion 120.

The shielding gas flow hole 123 may be a component that is defined in the lower portion of the protrusion 120 and provided to supply the shielding gas flowing into the secondary battery 1 to the welding hole 121. The shielding gas flow hole 123 may be provided to be communicated with a lower end of the welding hole 121, and the shielding gas may be supplied directly to a welding part (see an arrow G in FIG. 7). Thereafter, the shielding gas supplied thus to the welding part may flow upward through the welding hole 121 and be discharged to the outside (see an arrow F in FIG. 7).

As reviewed above, as the jig 100 for welding according to Embodiment 1 of the present invention has a structure which shields all portions except for a laser irradiation portion for welding between the collector plate 30 and the beading part 21 and a shielding gas insertion part for forming the atmosphere during the welding, spatter that is foreign matter caused by the welding may be prevented from being introduced into the secondary battery 1.

Moreover, in the jig 100 for welding according to Embodiment 1 of the present invention, the shielding gas inlet nozzle 130 may have a lower end that is disposed downward from the lower end of the welding hole 121 by a predetermined distance. This structure may further prevent the spatter, which is foreign matter caused by the welding, from being introduced into the secondary battery 1, and may serve to allow the shielding gas to smoothly flow.

Meanwhile, in the jig 100 for welding according to Embodiment 1 of the present invention, the body part 110 may include an edge part 112 that is a region other than a region in which the protrusion 120 is defined. A coupling hole 113 for fixing may be defined in the edge part 112. The body part 110 or the protrusion 120 has not to be shaken for stable welding in the welding process and thus, may be fixed to a fixing device through the coupling hole 113 so as to perform a stable welding work. Referring to FIGS. 1 and 3, a total of six coupling holes 113 may be provided, i.e., three coupling holes 113 may be provided in one side, and three coupling holes may be provided in the other side.

### Embodiment 2

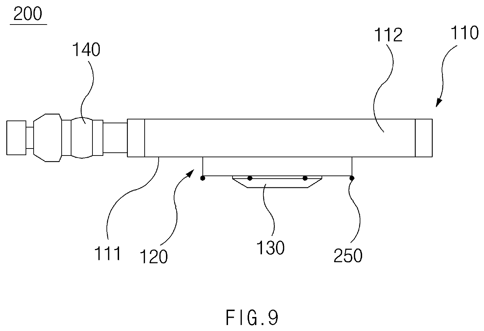

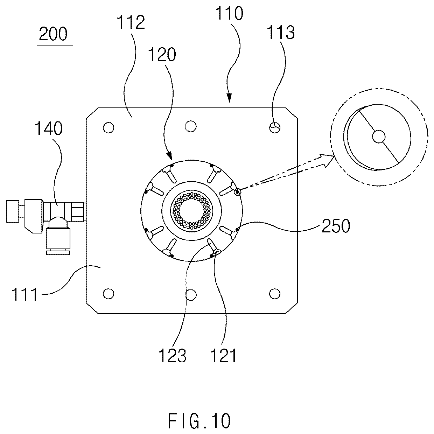

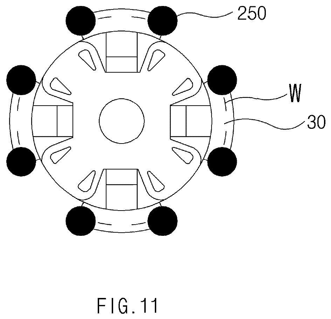

FIG. 9 is a front view illustrating a jig for welding according to Embodiment 2 of the present invention. FIG. 10 is a bottom view illustrating a jig for welding according to Embodiment 2 of the present invention. FIG. 11 is a plan view illustrating a portion of a collector plate, which is pressed by a jig for welding according to Embodiment 2 of the present invention.

Embodiment 2 of the present invention is different from Embodiment 1 in that, in the jig 100 for welding according to Embodiment 1 of the present invention, the protrusion 120 includes a pressing protrusion 250.

The content in common with Embodiment 1 will be preferably omitted and the description of Embodiment 2 will be focused on characteristics of a manufacturing method. That is, it is apparent that the content that is not described in Embodiment 2 may be regarded as the content of Embodiment 1 if necessary.

Referring to FIGS. 9 and 10, a jig 200 for welding according to Embodiment 2 of the present invention relates to the jig 200 for welding, which is used in a welding process during manufacturing of a secondary battery, and includes a body part 110, and a protrusion 120 that extends from a bottom surface 111 of the body part in a downward direction, has a size corresponding to a top opening of the secondary battery, and is inserted into the top opening of the secondary battery in the welding process. A welding hole 121 through which laser that performs the welding passes is defined in each of a perimetric portion of the protrusion 120 and a region of the body part 110, which corresponds to the perimetric portion of the protrusion 120. The protrusion 120 includes a pressing portion 122 that is provided in a peripheral part of the welding hole 121 and presses an object to be welded in the secondary battery 1.

Here, the pressing portion 122 may be the pressing protrusion 250 that is provided on a bottom surface of the protrusion 120 and presses the object to be welded. The pressing protrusion 250 may be a portion that is provided so as to further protrude from the bottom surface of the protrusion 120, which is adjacent to the welding hole 121, in a downward direction D. FIG. 10 illustrates an enlarged view of the pressing protrusion 250.

Referring to FIGS. 9 and 10, the pressing protrusion 250 may be provided to be adjacent to one side or the other side of the welding hole 121 based on a perimetric direction of the protrusion 120. Accordingly, the pressing protrusion 250 may perform the pressing so as to be adjacent to one side or the other side of a welding position W at which the welding is performed (see FIG. 11).

The pressing protrusion 250 of the protrusion 120 may be a component that enables point contact, not surface contact, when pressing objects to be welded. Thus, this pressing protrusion 250 may improve quality of the welding by increasing a welding force between a collector plate 30 and a beading part 21, which are the objects to be welded, to increase a degree of completion of the welding.

Meanwhile, FIG. 11 illustrates a position pressed by the pressing protrusion 250 on a top surface of the collector plate 30. As illustrated in FIG. 11, a pair pressing protrusions 250 may be provided in each of positions at which a perimetric portion of the collector plate 30 is quartered at an angle of 90 degree. In this case, a total of eight pressing protrusions 250 may be provided.

### Embodiment 3

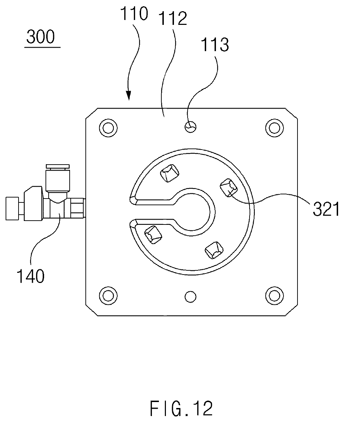

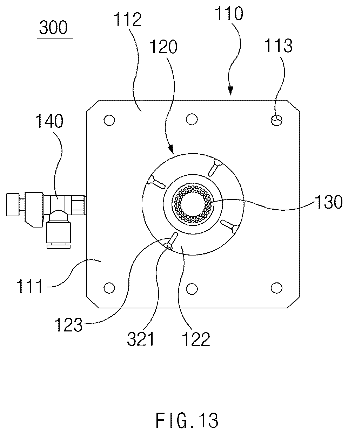

FIG. 12 is a plan view illustrating a jig for welding according to Embodiment 3 of the present invention. FIG. 13 is a bottom view illustrating a jig for welding according to Embodiment 3 of the present inventions.

Embodiment 3 of the present invention is different from Embodiment 1 in that, in the jig 100 for welding according to Embodiment 1 of the present invention, the configuration such as the number of welding hole, is different.

The content in common with Embodiment 1 will be preferably omitted and the description of Embodiment 3 will be focused on characteristics of the welding hole. That is, it is apparent that the content that is not described in Embodiment 3 may be regarded as the content of Embodiment 1 if necessary.

Also in a jig 300 for welding according to Embodiment 3 of the present invention, a welding hole 321 through which laser that performs the welding passes may be defined in each of a perimetric portion of a protrusion 120 and a region of a body part 110, which corresponds to the perimetric portion of the protrusion 120. That is, the welding hole 321 may be defined in the perimetric portion of the protrusion 120, and the welding hole 321 may be defined also in the body part 110 so as to communicated with the welding hole 321 defined in the perimetric portion of the protrusion 120. Specifically, the laser that performs the welding needs to pass through the body part 110 and the protrusion 120, and a path through which this laser passes may be the welding hole 321. The welding holes 321 may be provided in each of positions at which a perimetric portion of the protrusion 120 is quartered at an angle of 90 degree to form a total of four through-holes.

The protrusion 120 may include a pressing portion 122 that is provided in a peripheral part of the welding hole 321 and presses an object to be welded in the secondary battery. The pressing portion 122 may be a portion of a bottom surface of the protrusion 120, which presses the object to be welded. That is, two objects to be welded to each other need to be pressed so as to be in close contact with each other during performing laser welding while the laser passes through the welding hole 321 and is emitted onto the objects to be welded. To this end, a component that presses the objects to be welded may be necessary. As a result, as necessary, the pressing portion 122 may be a portion that presses the objects to be welded. Thus, the pressing portion 122 may be a portion that is disposed around the welding hole 321 on the bottom surface of the protrusion 120.

Although the present invention has been described with reference to the limited embodiments and drawings, the present invention is not limited thereto and may be variously implemented by those of ordinary skill in the art to which the present invention pertains, within the technical idea of the present invention as defined by the appended claims.

### [Description of the Symbols]

1: Secondary battery
10: Electrode assembly
20: Can body
21: Beading part
30: Collector plate
100, 200, 300: Jig for welding
110: Body part
111: Bottom surface of body part
112: Edge part
113: Coupling hole
120: Protrusion
121, 321: Welding hole
122: Pressing portion
123: Shielding gas flow hole
130: Shielding gas inlet nozzle
140: Shielding gas supply pipe
250: Pressing protrusion
W: Welding position

## Claims

1. A jig (100, 200, 300) for use in a welding process during manufacturing of a secondary battery (1), the jig (100, 200, 300) comprising:
a body part (110); and
a protrusion (120) extending downward from a bottom surface (111) of the body part (110), having a size corresponding to a top opening of the secondary battery (1), and suitable for being inserted into the top opening of the secondary battery (1) in the welding process,
wherein a welding hole (121) through which laser that performs the welding passes is defined in a perimetric portion of the protrusion (120) and a region of the body part (110), which corresponds to the perimetric portion of the protrusion (120),
wherein the protrusion (120) comprises a pressing portion (122) provided in a peripheral part of the welding hole (121) and configured to press an object to be welded in the secondary battery (1).

2. The jig (100, 200, 300) for welding of claim 1, wherein, in the welding hole (121), a size of an outlet through which the laser is discharged is smaller than a size of an inlet through which the laser enters.

3. The jig (100, 200, 300) for welding of claim 1, wherein the welding hole (121) has a shape in which a width gradually decreases in a downward direction.

4. The jig (100, 200, 300) for welding of claim 1, wherein the welding hole (121) is provided in each of positions at which a perimetric portion of the protrusion (120) is quartered at an angle of 90 degree to form a total of four through-holes.

5. The jig (100, 200, 300) for welding of claim 1, wherein a pair of welding holes (121) are provided in each of positions at which a perimetric portion of the protrusion (120) is quartered at an angle of 90 degree to form a total of eight through-holes.

6. The jig (100, 200, 300) for welding of claim 1, wherein the pressing portion (122) is a portion of a bottom surface of the protrusion (120), which is configured to press the object to be welded.

7. The jig (100, 200, 300) for welding of claim 1, wherein the protrusion (120) comprises a shielding gas inlet nozzle (130) provided in an inner side of the perimetric portion and configured to allow shielding gas to flow into the secondary battery (1).

8. The jig (100, 200, 300) for welding of claim 7, wherein a shielding gas flow hole (123) through which the shielding gas flowing into the secondary battery (1) is supplied to the welding hole (121) is defined in a lower portion of the protrusion (120).

9. The jig (100, 200, 300) for welding of claim 8, wherein the shielding gas flow hole (123) is defined to be communicated with a lower end of the welding hole (121).

10. The jig (100, 200, 300) for welding of claim 7, wherein the shielding gas inlet nozzle (130) has a lower end that is disposed downward from the lower end of the welding hole (121) by a predetermined distance.

11. The jig (100, 200, 300) for welding of claim 7, wherein a shielding gas supply pipe (140) through which the shielding gas is supplied to the shielding gas inlet nozzle (130) is connected to a side surface of the body part (110).

12. The jig (100, 200, 300) for welding of claim 1, wherein the pressing portion (122) is a pressing protrusion (250) provided on a bottom surface of the protrusion (120) and configured to press the object to be welded.

13. The jig (100, 200, 300) for welding of claim 12, wherein the pressing protrusion (250) is provided to be adjacent to one side or the other side of the welding hole (121) in a perimetric direction of the protrusion (120).

14. The jig (100, 200, 300) for welding of claim 1, wherein the secondary battery (1) is a cylindrical type secondary battery (1), and
the protrusion (120) is provided in a cylindrical shape and extends downward from the bottom surface (111) of the body part (110).

15. The jig (100, 200, 300) for welding of claim 14, wherein the pressing portion (122) is configured to press a top surface of a collector plate (30) connected to an electrode assembly (10) in the cylindrical type secondary battery (1) in order to perform welding between the collector plate (30) and a beading part (21) that is provided in a can body (20) of the cylindrical type secondary battery (1).

## Patentansprüche

1. Vorrichtung (100, 200, 300) zur Verwendung in einem Schweißprozess während der Herstellung einer Sekundärbatterie (1), wobei die Vorrichtung (100, 200, 300) Folgendes umfasst:
einen Körperteil (110); und
einen Vorsprung (120), der sich von einer Unterseite (111) des Körperteils (110) nach unten erstreckt, eine Größe aufweisend, die einer oberen Öffnung der Sekundärbatterie (1) entspricht, und geeignet, um in dem Schweißprozess in die obere Öffnung der Sekundärbatterie (1) eingeführt zu werden,
wobei eine Schweißöffnung (121), durch die der Laser, der das Schweißen durchführt, hindurchtritt, in einem Umfangsabschnitt des Vorsprungs (120) und in einem dem Umfangsabschnitt des Vorsprungs (120) entsprechenden Bereich des Körperteils (110) definiert ist,
wobei der Vorsprung (120) einen Andrückabschnitt (122) umfasst, der in einem Randbereich der Schweißöffnung (121) bereitgestellt ist und ausgebildet ist, um ein zu schweißendes Objekt in der Sekundärbatterie (1) anzudrücken.

2. Vorrichtung (100, 200, 300) zum Schweißen nach Anspruch 1, wobei in der Schweißöffnung (121) eine Größe einer Austrittsöffnung, durch die der Laser austritt, kleiner ist als eine Größe einer Eintrittsöffnung, durch die der Laser eintritt.

3. Vorrichtung (100, 200, 300) zum Schweißen nach Anspruch 1, wobei die Schweißöffnung (121) eine Form aufweist, bei der sich eine Breite nach unten hin allmählich verringert.

4. Vorrichtung (100, 200, 300) zum Schweißen nach Anspruch 1, wobei die Schweißöffnung (121) an vier Positionen eines Umfangsabschnitts des Vorsprungs (120), die in Abständen von jeweils 90° angeordnet sind, bereitgestellt ist, um insgesamt vier Durchgangslöcher zu bilden.

5. Vorrichtung (100, 200, 300) zum Schweißen nach Anspruch 1, wobei jeweils paarweise Schweißöffnungen (121) an vier Positionen eines Umfangsabschnitts des Vorsprungs (120), die in Abständen von jeweils 90° angeordnet sind, bereitgestellt sind, um insgesamt acht Durchgangslöcher zu bilden.

6. Vorrichtung (100, 200, 300) zum Schweißen nach Anspruch 1, wobei der Andrückabschnitt (122) ein Abschnitt einer Unterseite des Vorsprungs (120) ist, der ausgebildet ist, um das zu schweißende Objekt anzudrücken.

7. Vorrichtung (100, 200, 300) zum Schweißen nach Anspruch 1, wobei der Vorsprung (120) eine Schutzgaseinlassdüse (130) umfasst, die an einer Innenseite des Umfangsabschnitts bereitgestellt ist und ausgebildet ist, um Schutzgas in die Sekundärbatterie (1) einzuleiten.

8. Vorrichtung (100, 200, 300) zum Schweißen nach Anspruch 7, wobei eine Schutzgasströmungsöffnung (123), durch die das in die Sekundärbatterie (1) einströmende Schutzgas zur Schweißöffnung (121) zugeführt wird, in einem unteren Abschnitt des Vorsprungs (120) definiert ist.

9. Vorrichtung (100, 200, 300) zum Schweißen nach Anspruch 8, wobei die Schutzgasströmungsöffnung (123) so definiert ist, dass sie mit einem unteren Ende der Schweißöffnung (121) in Verbindung steht.

10. Vorrichtung (100, 200, 300) zum Schweißen nach Anspruch 7, wobei die Schutzgaseinlassdüse (130) ein unteres Ende aufweist, das um einen vorbestimmten Abstand nach unten von dem unteren Ende der Schweißöffnung (121) angeordnet ist.

11. Vorrichtung (100, 200, 300) zum Schweißen nach Anspruch 7, wobei ein Schutzgaszuführrohr (140), durch das das Schutzgas zur Schutzgaseinlassdüse (130) zugeführt wird, an eine Seitenfläche des Körperteils (110) geschaltet ist.

12. Vorrichtung (100, 200, 300) zum Schweißen nach Anspruch 1, wobei der Andrückabschnitt (122) ein Andrückvorsprung (250) ist, der auf einer Unterseite des Vorsprungs (120) bereitgestellt ist und ausgebildet ist, um das zu schweißende Objekt anzudrücken.

13. Vorrichtung (100, 200, 300) zum Schweißen nach Anspruch 12, wobei der Andrückvorsprung (250) so bereitgestellt ist, dass er in Umfangsrichtung des Vorsprungs (120) an einer Seite oder der anderen Seite der Schweißöffnung (121) benachbart ist.

14. Vorrichtung (100, 200, 300) zum Schweißen nach Anspruch 1, wobei die Sekundärbatterie (1) eine zylindrische Sekundärbatterie (1) ist, und
der Vorsprung (120) in einer zylindrischen Form bereitgestellt ist und sich von der Unterseite (111) des Körperteils (110) nach unten erstreckt.

15. Vorrichtung (100, 200, 300) zum Schweißen nach Anspruch 14, wobei der Andrückabschnitt (122) ausgebildet ist, um eine Oberseite einer Kollektorplatte (30), die mit einer Elektrodenanordnung (10) in der zylindrischen Sekundärbatterie (1) geschaltet ist, anzudrücken, um ein Schweißen zwischen der Kollektorplatte (30) und einer Sicke (21), die in einem Dosenkörper (20) der zylindrischen Sekundärbatterie (1) bereitgestellt ist, durchzuführen.

## Revendications

1. Gabarit (100, 200, 300) destiné à être utilisé dans un procédé de soudage lors de la fabrication d'une batterie secondaire (1), le gabarit (100, 200, 300) comprenant :
une partie (110) formant corps ; et
une saillie (120) s'étendant vers le bas à partir d'une surface inférieure (111) de la partie (110) formant corps, présentant une taille correspondant à une ouverture supérieure de la batterie secondaire (1), et apte à être insérée dans l'ouverture supérieure de la batterie secondaire (1) dans le procédé de soudage,
dans lequel un trou de soudage (121), à travers lequel passe le laser réalisant le soudage, est défini dans une portion périmétrique de la saillie (120) et dans une région de la partie (110) formant corps qui correspond à la portion périmétrique de la saillie (120),
dans lequel la saillie (120) comprend une portion de pressage (122) aménagée dans une partie périphérique du trou de soudage (121) et configurée pour presser un objet destiné à être soudé dans la batterie secondaire (1).

2. Gabarit (100, 200, 300) de soudage selon la revendication 1, dans lequel, dans le trou de soudage (121), une dimension d'un orifice de sortie par lequel le laser est évacué est plus petite qu'une dimension d'un orifice d'entrée par lequel le laser pénètre.

3. Gabarit (100, 200, 300) de soudage selon la revendication 1, dans lequel le trou de soudage (121) présente une forme dans laquelle la largeur diminue progressivement dans une direction dirigée vers le bas.

4. Gabarit (100, 200, 300) de soudage selon la revendication 1, dans lequel le trou de soudage (121) est aménagé dans chacune des positions où une portion périmétrique de la saillie (120) est divisée en quatre parties selon un angle de 90 degrés, afin de former un total de quatre trous traversants.

5. Gabarit (100, 200, 300) de soudage selon la revendication 1, dans lequel une paire de trous de soudure (121) est aménagée à chacune des positions où une portion périmétrique de la saillie (120) est divisée en quatre parties selon un angle de 90 degrés, afin de former un total de huit trous traversants.

6. Gabarit (100, 200, 300) de soudage selon la revendication 1, dans lequel la portion de pressage (122) est une portion de la surface inférieure de la saillie (120), configurée pour presser l'objet destiné à être soudé.

7. Gabarit (100, 200, 300) de soudage selon la revendication 1, dans lequel la saillie (120) comprend une buse (130) d'entrée de gaz de protection, aménagée dans un côté interne de la portion périmétrique et qui est configurée pour permettre à un gaz de protection de s'écouler dans la batterie secondaire (1).

8. Gabarit (100, 200, 300) de soudage selon la revendication 7, dans lequel un trou (123) d'écoulement de gaz de protection, par lequel le gaz de protection pénétrant dans la batterie secondaire (1) est acheminé vers le trou de soudage (121), est défini dans une portion inférieure de la saillie (120).

9. Gabarit (100, 200, 300) de soudage selon la revendication 8, dans lequel le trou (123) d'écoulement de gaz de protection est défini de façon à être en communication avec une extrémité inférieure du trou de soudage (121).

10. Gabarit (100, 200, 300) de soudage selon la revendication 7, dans lequel la buse (130) d'entrée de gaz de protection présente une extrémité inférieure qui est disposée, d'une distance prédéterminée, au-dessous de l'extrémité inférieure du trou de soudage (121).

11. Gabarit (100, 200, 300) de soudage selon la revendication 7, dans lequel un tuyau (140) d'alimentation en gaz de protection, par lequel le gaz de protection est acheminé vers la buse (130) d'entrée de gaz de protection, est relié à une surface latérale de la partie (110) formant corps.

12. Gabarit (100, 200, 300) de soudage selon la revendication 1, dans lequel la portion de pressage (122) est une saillie de pressage (250) aménagée sur une surface inférieure de la saillie (120) et configurée pour presser l'objet destiné à être soudé.

13. Gabarit (100, 200, 300) de soudage selon la revendication 12, dans lequel la saillie de pressage (250) est prévue de manière à être adjacente à un côté ou à l'autre côté du trou de soudage (121), dans une direction périmétrique de la saillie (120).

14. Gabarit (100, 200, 300) de soudage selon la revendication 1, dans lequel la batterie secondaire (1) est une batterie secondaire (1) de type cylindrique, et
la saillie (120) est aménagée selon une forme cylindrique et s'étend vers le bas depuis la surface inférieure (111) de la partie (110) formant corps.

15. Gabarit (100, 200, 300) de soudage selon la revendication 14, dans lequel la portion de pressage (122) est configurée pour presser une surface supérieure d'une plaque collectrice (30) reliée à un ensemble (10) formant électrode dans la batterie secondaire (1) de type cylindrique, afin d'effectuer un soudage entre la plaque collectrice (30) et une partie (21) formant bourrelet qui est aménagée dans un corps de boîte (20) de la batterie secondaire (1) de type cylindrique.
